# EUROPÄISCHE PATENTANMELDUNG

(11) **EP 2 818 043 A2**
(43) Veröffentlichungstag der Anmeldung: **31.12.2014**
(21) Anmeldenummer: 14171974.0
(22) Anmeldetag: 11.06.2014
(51) Int. Cl.: A01K 5/01

(54) **Futternapf**

(30) Priorität: 27.06.2013 DE 102013212536
(71) Anmelder: Rotho Kunststoff AG, 5303 Würenlingen (CH)
(72) Erfinder: Thoma, Christian, 79774 Abbruck (DE); Wollin, Moshe Cohen, 65603 Tel Aviv (IL)
(74) Vertreter: Lemcke, Brommer & Partner Patentanwälte Partnerschaft mbB

(57) **Zusammenfassung**

Die vorliegende Erfindung betrifft einen Futternapf, der ein Napfelement (1) und ein Rahmenelement (4) umfasst, wobei das Napfelement in das Rahmenelement einsetzbar und aus diesem entnehmbar ist und das Rahmenelement verstellbare Stützen (10) zum Verstellen der Bodenhöhe des in das Rahmenelement eingesetzten Napfelements aufweist.

## Beschreibung

Die vorliegende Erfindung betrifft einen Futternapf für Haustiere, mit einem Napfelement und einem Rahmenelement, wobei das Napfelement in das Rahmenelement einsetzbar und aus diesem entnehmbar ist.

Futternäpfe, die in der Regel zum Füttern von Hunden dienen, sind in vielen Formen und Ausgestaltungen bekannt. Allen gemeinsam ist ein Napfelement, das meist die Form eines Kugelabschnitts oder eines Stücks eines Ellipsoids aufweist. Dieses Napfelement ist je nach Ausformung des Futternapfs entweder einstückig mit einem Stellrand verbunden, der das Napfelement umgibt und Grifföffnungen zum Ergreifen des Futternapfs aufweisen kann, oder aber es ist in ein Rahmenelement eingesetzt, das zur Erhöhung der Stabilität des Futternapfs teilweise signifikant größere Abmessungen als das eigentliche Napfelement aufweist. Bei einem zweiteilig ausgebildeten Futternapf ist das Napfelement aus dem Rahmenelement entnehmbar, so dass das Napfelement unabhängig vom Rahmenelement gereinigt werden kann.

Zusammengesetzte Futternäpfe mit Napfelementen und Rahmenelementen sind im Stand der Technik in unterschiedlichsten Formen bekannt, da hier besonders viele Freiheitsgrade für ein unverwechselbares Design gegeben sind. Hierbei sind auch Futternäpfe bekannt, die in verschiedenen Rahmenelement-Höhen erhältlich sind, um die Bodenhöhe des in das Rahmenelement eingesetzten Napfelements an die Größe des zu fütternden Haustiers anzupassen. Denn insbesondere bei Hunden gibt es unterschiedlichste Körpergrößen bei den verschiedenen Rassen, die vom Chihuahua mit einer Widerristhöhe von typischerweise nur etwa 20 cm bis zum Irish Wolfhound mit einer Widerristhöhe von typischerweise über 80 cm reichen.

Gerade größere Hunderassen verändern ihre Widerristhöhe beim Heranwachsen vom Welpen zum ausgewachsenen Hund jedoch stark. Sollen solche Hunde mit einem Futternapf gefüttert werden, dessen Bodenhöhe der Körpergröße des Hundes angepasst ist, müssen während des Heranwachsens mehrere Futternäpfe mit wachsenden Bodenhöhen angeschafft werden.

Der vorliegenden Erfindung liegt daher die Aufgabe zugrunde, einen Futternapf der eingangs genannten Art vorzuschlagen, der an die Körpergröße des zu fütternden Haustiers anpassbar ist.

Gelöst ist diese Aufgabe durch einen Futternapf mit den Merkmalen des Anspruchs 1. Bevorzugte Ausgestaltungen und Weiterbildungen des erfindungsgemäßen Futternapfs finden sich in den Ansprüchen 2 bis 14.

Erfindungsgemäß wird ein Futternapf mit einem Napfelement und einem Rahmenelement also solcherart weitergebildet, dass das Rahmenelement mit verstellbaren Stützen zum Verstellen der Bodenhöhe des in das Rahmenelement eingesetzten Napfelements versehen wird. Diese verstellbaren Stützen sind vorzugsweise nach unten wirkend am Rahmenelement angebracht, so dass das Rahmenelement mitsamt dem Napfelement in seiner Bodenhöhe veränderlich ist. Es liegt jedoch auch im Rahmen der vorliegenden Erfindung, die verstellbaren Stützen nach oben wirkend am Rahmenelement anzubringen, so dass das Napfelement in seiner Bodenhöhe veränderlich ist, ohne das Rahmenelement höher oder tiefer zu legen.

Die verstellbaren Stützen des erfindungsgemäßen Futternapfs stellen eine konstruktiv einfach zu verwirklichende, aber dennoch effektive Maßnahme dar, mit der die Bodenhöhe des Napfelements verändert werden kann. Im einfachsten Fall ruht das Rahmenelement des erfindungsgemäßen Futternapfs auf den Stützen, wobei sich diese beim Verstellen vorzugsweise nicht nur senkrecht zu einer Stellfläche verlängern und verkürzen, sondern sich beim Verlängern gleichzeitig schräg nach außen bewegen, so dass sich mit zunehmender Bodenhöhe des Napfelements die durch die Stützen aufgespannte Stellfläche vergrößert. Hierdurch verbessert sich die Stabilität des Futternapfs und ein etwaiges Umkippen desselben wird zuverlässig verhindert.

Um die Stabilität nochmals zu verbessern, sind die verstellbaren Stützen des erfindungsgemäßen Futternapfs vorzugsweise mit Füßen aus rutschhemmendem Material, insbesondere einem weichelastischen Elastomer versehen.

Besonders bevorzugt ist es im Rahmen der vorliegenden Erfindung, wenn die verstellbaren Stützen einzeln verstellbar sind, um nicht nur die Bodenhöhe des in das Rahmenelement eingesetzten Napfelements zu verändern, sondern auch dessen Neigung verstellen zu können. Hierbei ist es besonders bevorzugt, wenn drei verstellbare Stützen vorgesehen sind, die das Prinzip eines Dreibeins verwirklichen und ermöglichen, dass der erfindungsgemäße Futternapf auch auf unebenen Böden stabil steht sowie in seiner Höhe und seiner Neigung veränderlich bzw. an die spezifischen Anforderungen anpassbar ist. Die Verstellbarkeit der Neigung des Napfelements ist hierbei nicht nur deswegen vorteilhaft, weil damit etwaige Bodenunebenheiten ausgeglichen werden können, sondern auch deswegen, weil es vereinzelt bevorzugt ist, das Napfelement in einem gewissen Neigungswinkel aufzustellen, um dem zu fütternden Haustier den Zugang zum Napfinhalt zu erleichtern.

Bevorzugt sind die verstellbaren Stützen des erfindungsgemäßen Futternapfs solcherart am Rahmenelement befestigt, dass sie entlang von Langlöchern im Rahmenelement geführt und mittels der Langlöcher am Rahmenelement festgesetzt werden können. Hierzu ist für jede Stütze vorzugsweise mindestens ein lösbares Fixiermittel in den Langlöchern vorhanden, wobei dieses Fixiermittel vorzugsweise eine Feststellschraube ist, jedoch auch ein Klemmelement oder ein einrastendes Federelement sein kann.

Um eine gleichmäßige Verstellbarkeit des erfindungsgemäßen Futternapfs sicherzustellen, sind die bevorzugt vorhandenen Langlöcher vorzugsweise mit Einrastmitteln und/oder Markierungen versehen.

Nach einer weiter bevorzugten Weiterbildung der vorliegenden Erfindung ist das Napfelement des erfindungsgemäßen Futternapfs mit einem auskragenden Rand zum Aufsetzen auf eine Unterstützungsfläche des Rahmenelements ausgestattet. Vorzugsweise ist dieser auskragende Rand mit einer Nut oder einer Hinterschneidung versehen, so dass zwischen dem Rand und dem eigentlichen Napfelement ein Zwischenraum gebildet wird, in dem die Finger eines Benutzers aufgenommen werden können. Der Benutzer kann dann das Napfelement am auskragenden Rand leicht ergreifen kann.

Hierbei ist eine weitere Ausgestaltung der Erfindung vorteilhaft, gemäß welcher das Rahmenelement derart ausgebildet ist, dass der auskragende Rand des in das Rahmenelement eingesetzten Napfelements an mindestens einer Stelle seines Umfangs über das Rahmenelement bzw. über dessen Unterstützungsfläche hinaussteht, so dass das Napfelement von einem Benutzer leicht ergriffen und aus dem Rahmenelement herausgehoben werden kann.

Eine weitere bevorzugte Weiterbildung der vorliegenden Erfindung besteht darin, einen Adapter vorzusehen, der vorzugsweise als Adapterring ausgebildet ist, und der zwischen das Rahmenelement und das Napfelement des Futternapfs eingesetzt wird. Mit einem solchen Adapter wird ermöglicht, dass Napfelemente unterschiedlicher Größe in das Rahmenelement eingesetzt werden können. Dies ist beispielsweise dann vorteilhaft, wenn der erfindungsgemäße Futternapf mit einem heranwachsenden Hund mittels der erfindungsgemäß vorgesehenen verstellbaren Stützen mitwächst. Denn mit wachsender Größe des Hundes wächst auch sein Nahrungsbedarf, so dass es Vorteile bietet, wenn mittels eines Adapters ein größeres Napfelement eingesetzt werden kann, als dies ohne Adapter möglich wäre, oder umgekehrt ein kleineres Napfelement mittels eines entsprechend "verkleinernd" ausgebildeten Adapters zusammen mit dem Rahmenelement verwendet werden kann.

Besonders bevorzugt ist es im Rahmen der vorliegenden Erfindung schließlich, das Rahmenelement aus spritzgegossenem Kunststoff zu fertigen. Das Napfelement kann aus Metall bestehen, es ist jedoch auch hier bevorzugt, wenn es ein Spritzgussteil aus Kunststoff ist, vorzugsweise mit einer im In-Mold-Labeling-Verfahren angegossenen Metallfolien-Beschichtung.

Ein Ausführungsbeispiel für einen erfindungsgemäßen Futternapf wird im Folgenden anhand der beigefügten Zeichnungen näher beschrieben und erläutert. Es zeigen:
- Figur 1: eine schematische perspektivische Ansicht eines Ausführungsbeispiels für einen erfindungsgemäßen Futternapf;
- Figur 2: eine seitliche Ansicht des Futternapfs aus Figur 1;
- Figur 3: eine seitliche Ansicht des Futternapfs aus Figur 1 in einem angehobenen Zustand;
- Figur 4: eine perspektivische Ansicht des Futternapfs aus Figur 1 in einem weiter angehobenen Zustand;
- Figur 5: eine perspektivische Ansicht des Futternapfs aus Figur 1 mit abgehobenem Napfelement;
- Figur 6: eine perspektivische Ansicht eines Futternapfs mit einem Adapter zwischen dem Rahmenelement und dem Napfelement.

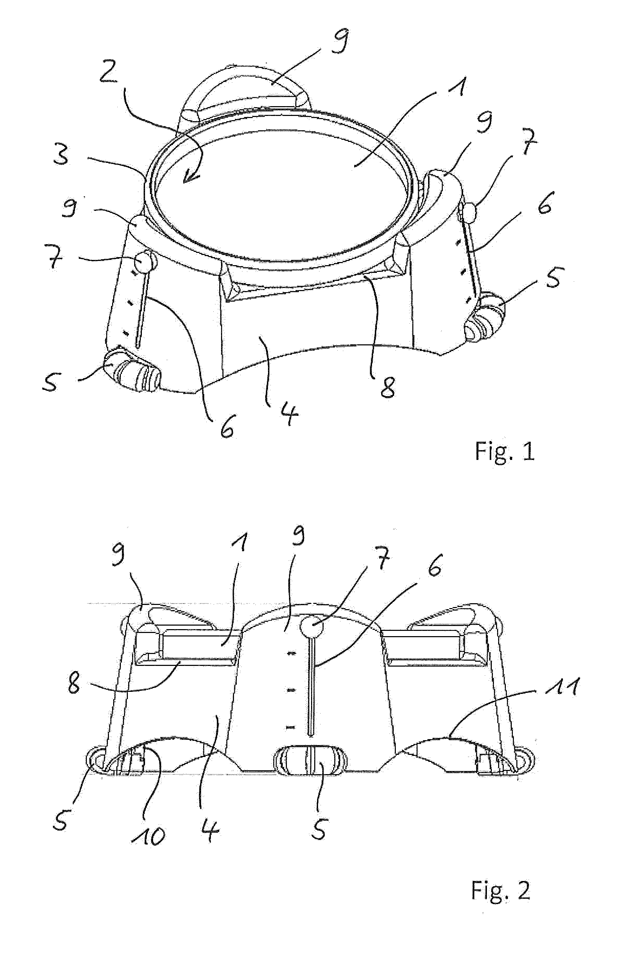

In Figur 1 ist ein Ausführungsbeispiel für einen erfindungsgemäß ausgestalteten Futternapf in perspektivischer Ansicht dargestellt. Dieser Futternapf besteht aus einem Napfelement 1 mit einem Grundkörper 2 in Form eines Kugelabschnitts und einem auskragenden Rand 3, sowie einem Rahmenelement 4, in dem das Napfelement 1 sitzt und das auf drei Füßen 5 ruht, die mit einem rutschsicheren elastomeren Material versehen sind.

Die drei Füße 5 bilden die unteren Enden von (hier nicht sichtbaren) verstellbaren Stützen, die auf der Rückseite von Langlöchern 6 angeordnet sind und mittels jeweils einer Feststellschraube 7 am Langloch 6 befestigt sind.

Das Rahmenelement 4 ist mit Unterstützungsflächen 8 versehen, auf denen der auskragende Rand 3 des Napfelements 1 aufliegt. Ferner weist das Rahmenelement 4 drei erhöhte Eckbereiche 9 auf, die für einen sicheren Sitz und Halt des Napfelements 1 im Rahmenelement 4 sorgen und gleichzeitig die verstellbaren Stützen aufnehmen. Zwischen dem in Figur 1 hinten angeordneten Eckbereich 9 und den beiden anderen Eckbereichen 9 sind die Unterstützungsflächen 8 des Rahmenelements 4 schmaler ausgebildet, so dass der auskragende Rand 3 des Napfelements 1 dort über die Unterstützungsflächen 8 übersteht und von einem Benutzer leicht ergriffen werden kann.

Sowohl das Rahmenelement 4 als auch die Stützen und das Napfelement 1 sind als Spritzgussteile aus Kunststoff gefertigt, wobei das Napfelement 1 im InMold-Labeling-Verfahren mit einer Metallfolie spritzgegossen wurde, so dass es im Ergebnis eine metallische Oberfläche aufweist, die kratzfest und leicht zu reinigen ist.

Figur 2 verdeutlicht in einer seitlichen Ansicht die in Figur 1 beschriebenen Teile und Merkmale des hier dargestellten Ausführungsbeispiels weiter, wobei die gleichen Bezugszeichen verwendet werden und insoweit auf die Beschreibung der Figur 1 verwiesen wird. In Ergänzung zur Figur 1 sind in Figur 2 Teile der verstellbaren Stützen 10 sichtbar, an deren unteren Enden die Füße 5 angebracht sind und die mit den Feststellschrauben 7 an den Langlöchern 6 befestigt sind.

In den Figuren 1 und 2 sind die Feststellschrauben 7 am oberen Ende der Langlöcher 6 fixiert, so dass sich der Futternapf in seiner tiefst möglichen Position mit der geringst möglichen Bodenhöhe des Napfelements 1 befindet.

Wie in Figur 2 außerdem zu erkennen ist, weist das Rahmenelement 4 an seinem unteren Ende zwischen den Eckbereichen 9 jeweils eine bogenförmige Aussparung 11 auf, um das Rahmenelement 4 mit einer Hand untergreifen und so leicht anheben zu können.

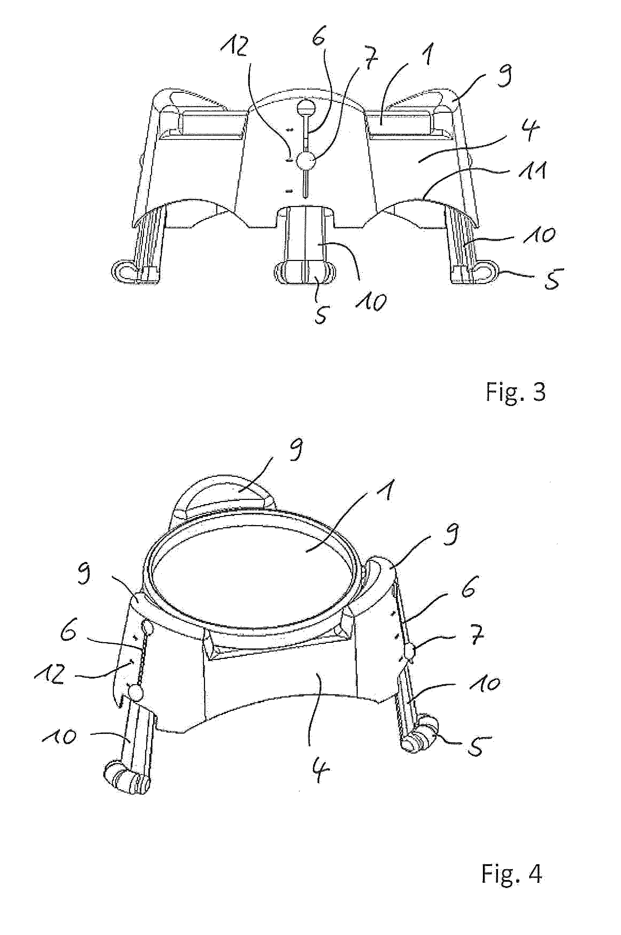

Figur 3 ist eine der Figur 2 entsprechende Seitenansicht des vorliegenden Ausführungsbeispiels eines erfindungsgemäß ausgestalteten Futternapfs, wobei jedoch die verstellbaren Stützen 10 etwa zur Hälfte ausgefahren sind, um die Bodenhöhe des Napfelements 1 zu vergrößern und den Futternapf so anzuheben. Die Feststellschrauben 7 sind demgemäß in den Langlöchern 6 nach unten gewandert und bei einer Markierung 12 fixiert worden. Diese Markierung 12 ist an jedem der drei Langlöcher 6 angebracht um zu ermöglichen, dass die Stützen 10 gleichmäßig verstellt werden. Sie können auch dazu dienen, die drei Stützen 10 bewusst ungleichmäßig zu verstellen, um nicht nur die Bodenhöhe des Napfelements 1 zu verändern, sondern auch dessen Neigung wunschgemäß einzustellen oder zu korrigieren.

Wie Figur 3 verdeutlicht, liegen die drei Eckbereiche 9 auf einer konischen Fläche, so dass die verstellbaren Stützen 10 nicht senkrecht zu einer Unterstützungsfläche verlaufen, sondern schräg nach außen gestellt sind. Hierdurch vergrößert sich die von den drei Füßen 5 aufgespannte Fläche, wenn der Futternapf bzw. das Napfelement 1 angehoben wird. Dies erhöht die Stabilität des Futternapfs. Gleichzeitig schützt die rutschfeste Ausbildung der aus einem Elastomer bestehenden Füße 5 den Futternapf vor einem unbeabsichtigten Verrutschen, und die Anzahl und Anordnung der Stützen, die ein klassisches Dreibein bilden, gewährleisten einen sicheren Stand, selbst wenn der Untergrund nicht völlig eben ist.

Figur 4 zeigt das vorliegende Ausführungsbeispiel eines erfindungsgemäßen Futternapfs wiederum in einer perspektivischen Ansicht wie in Figur 1, jedoch sind hier die verstellbaren Stützen 10 vollständig ausgefahren, so dass der Futternapf seine größtmögliche Höhe einnimmt. Die Feststellschrauben 7 sind demgemäß an der untersten Markierung 12 der Langlöcher 6 fixiert. Wie hier zu erkennen ist, kann die Bodenhöhe des Napfelements 1 durch Ausziehen der verstellbaren Stützen 10 auf etwa das Doppelte vergrößert werden. Die Füße 5 sind abgerundet ausgebildet, um auch dann einen sicheren Stand des Futternapfs zu gewährleisten, wenn dieser beispielsweise durch nur eine nicht ganz ausgezogenen Stütze 10 in seiner Neigung verändert wird.

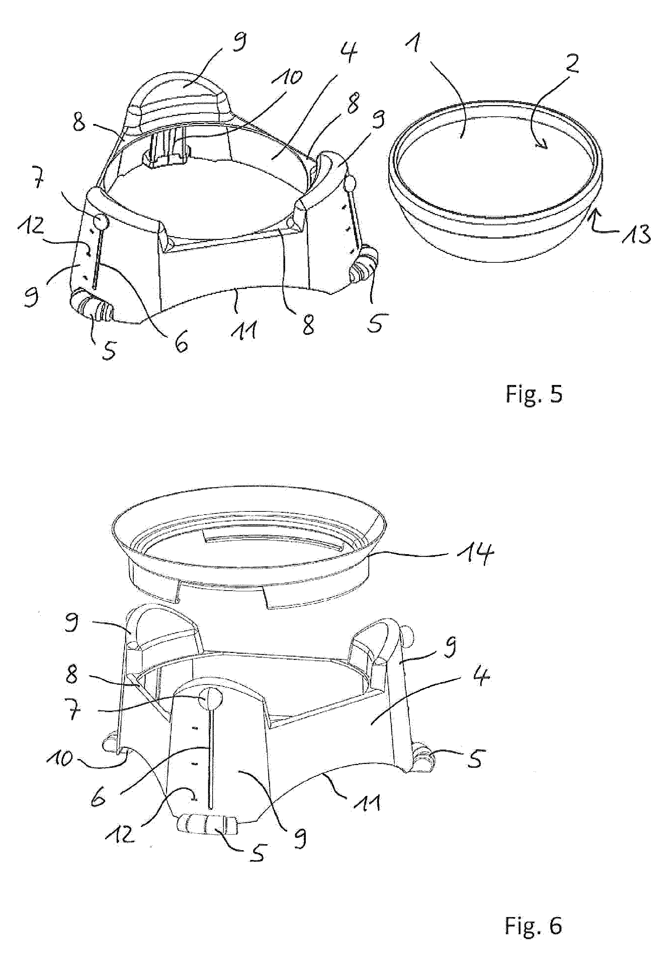

Figur 5 zeigt schließlich wiederum in einer perspektivischen Ansicht den in den vorangehenden Figuren bereits dargestellten Futternapf, wobei hier das Napfelement 1 aus dem Rahmenelement 4 herausgenommen worden ist. Hierdurch werden die Unterstützungsflächen 8 sichtbar, wobei diese, wie anhand Figur 1 beschrieben, in den an den hinteren Eckbereich 9 angrenzenden Bereichen besonders dünn ausgebildet sind, so dass dort der auskragende Rand des Napfelements 1 über das Rahmenelement 4 übersteht und leicht ergriffen werden kann. Durch die für das Napfelement 1 vorgesehene Öffnung im Rahmenelement 4 hindurch ist eine verstellbare Stütze 10 sowie deren Anordnung innerhalb des hinteren Eckbereichs 9 sichtbar.

Das Napfelement 1 ist so gefertigt, dass sein auskragender Rand 3 quasi nach unten umgebogen ist, so dass sich zwischen dem Grundkörper 2 des Napfelements 1 und dem umlaufenden Rand 3 ein Zwischenraum 13 bildet, der so dimensioniert ist, dass die Finger eines Benutzers hineinpassen. Das Napfelement 1 kann daher durch Ergreifen des Randes 3 aus dem Rahmenelement 4 entnommen und getragen werden, ohne das Innere seines Grundkörpers 2 anfassen zu müssen.

In Figur 6 ist eine perspektivische Ansicht eines Futternapfs dargestellt, dessen Rahmenelement 4 gleich ausgebildet ist, wie bei den Ausführungsbeispielen der vorangehenden Figuren, wobei die verstellbaren Stützen 10 wie in Figur 2 vollständig eingeschoben sind und sich die Feststellschrauben 7 am oberen Ende der Langlöcher 6 befinden.

Im Unterschied zu den vorangegangenen Zeichnungen weist das in Figur 6 dargestellte Ausführungsbeispiel einen Adapter 14 auf, der hier als kreisrunder Adapterring ausgebildet ist. Dieser kann in das Rahmenelement 4 eingesetzt werden, so dass ein deutlich größeres Napfelement 1 verwendet werden kann.

Der Adapter 14 kann selbstverständlich auch so ausgestaltet sein, dass er das Einsetzen eines gegenüber den vorangehenden Figuren kleineren Napfelements 1 ermöglicht, so dass der Futternapf insgesamt nicht nur durch Verstellen seiner Höhe und gegebenenfalls Neigung, sondern auch durch Einsetzen unterschiedlich großer Napfelemente an unterschiedliche Haustiere und insbesondere an heranwachsende Haustiere anpassbar ist.

## Patentansprüche

1. Futternapf, umfassend ein Napfelement (1) und ein Rahmenelement (4), wobei das Napfelement (1) in das Rahmenelement (4) einsetzbar und aus diesem entnehmbar ist,
**dadurch gekennzeichnet,**
**dass** das Rahmenelement (4) verstellbare Stützen (10) zum Verstellen der Bodenhöhe des in das Rahmenelement (4) eingesetzten Napfelements aufweist.

2. Futternapf nach Anspruch 1,
**dadurch gekennzeichnet,**
**dass** die verstellbaren Stützen (10) nach unten wirkend am Rahmenelement (4) angebracht sind.

3. Futternapf nach Anspruch 2,
**dadurch gekennzeichnet,**
**dass** die verstellbaren Stützen (10) mit Füßen (5) aus rutschhemmendem Material versehen sind.

4. Futternapf nach mindestens einem der Ansprüche 1 bis 3,
**dadurch gekennzeichnet,**
**dass** die verstellbaren Stützen (10) einzeln verstellbar sind, um die Neigung des in das Rahmenelement (4) eingesetzten Napfelements (1) zu verstellen.

5. Futternapf nach mindestens einem der Ansprüche 1 bis 4,
**dadurch gekennzeichnet,**
**dass** drei verstellbare Stützen (10) vorgesehen sind.

6. Futternapf nach mindestens einem der Ansprüche 1 bis 5,
**dadurch gekennzeichnet,**
**dass** das Rahmenelement (4) mit Langlöchern (6) zum Führen und Festsetzen der verstellbaren Stützen (10) versehen ist.

7. Futternapf nach Anspruch 6,
**dadurch gekennzeichnet,**
**dass** die verstellbaren Stützen (10) mit jeweils mindestens einem lösbaren Fixiermittel, vorzugsweise einer Feststellschraube (7), an den Langlöchern (6) befestigt sind.

8. Futternapf nach einem der Ansprüche 6 oder 7,
**dadurch gekennzeichnet,**
**dass** die Langlöcher (6) mit Einrastmitteln und/oder Markierungen (12) zum gleichmäßigen Verstellen der verstellbaren Stützen (10) versehen sind.

9. Futternapf nach mindestens einem der Ansprüche 1 bis 8,
**dadurch gekennzeichnet,**
**dass** das Napfelement (1) einen auskragenden Rand (3) zum Aufsetzen auf eine Unterstützungsfläche (8) des Rahmenelements (4) aufweist.

10. Futternapf nach Anspruch 9,
**dadurch gekennzeichnet,**
**dass** der auskragende Rand (3) an seiner Unterseite einen Hinterschnitt oder eine Nut aufweist, um einen Zwischenraum (13) zur Aufnahme von Fingern eines Benutzers zu bilden.

11. Futternapf nach einem der Ansprüche 9 oder 10,
**dadurch gekennzeichnet,**
**dass** der auskragende Rand (3) an mindestens einer Stelle seines Umfangs seitlich über die Unterstützungsfläche (8) des Rahmenelements (4) hinaussteht, wenn das Napfelement (1) in das Rahmenelement (4) eingesetzt ist.

12. Futternapf nach mindestens einem der Ansprüche 1 bis 11,
**dadurch gekennzeichnet,**
**dass** ein Adapter (14) zum Anordnen zwischen das Rahmenelement (4) und das Napfelement (1) vorgesehen ist.

13. Futternapf nach Anspruch 12,
**dadurch gekennzeichnet,**
**dass** der Adapter (14) als Adapterring ausgebildet ist.

14. Futternapf nach mindestens einem der Ansprüche 1 bis 13,
**dadurch gekennzeichnet,**
**dass** das Rahmenelement (4) aus spritzgegossenem Kunststoff gefertigt ist.
